# EUROPÄISCHE PATENTANMELDUNG

(11) **EP 1 748 200 A1**
(43) Veröffentlichungstag der Anmeldung: **31.01.2007**
(21) Anmeldenummer: 05405455.6
(22) Anmeldetag: 27.07.2005
(51) Int. Cl.: F16C 29/04, F16C 13/00

(54) **Linearführung**

(71) Anmelder: GÜDEL GROUP AG, 4900 Langenthal (CH)
(72) Erfinder: Fleisch, Christian, 3415 Hasle-Rüegsau (CH); Güdel, Rudolf, 4500 Solothurn (CH); Zulauf, Walter, 4937 Ursenbach (CH)
(74) Vertreter: Roshardt, Werner Alfred

(57) **Zusammenfassung**

Eine Linearführung umfasst eine Schiene (100) mit Profilierungen (101, 102) auf zwei gegenüberliegenden Seiten und eine Rolleneinheit (200), wobei die Rolleneinheit (200) und die Schiene (100) relativ zueinander in Schienenlängsrichtung verschiebbar sind. Die Rolleneinheit (200) weist mindestens zwei Rollen (231, 241) auf, welche auf den Profilierungen (101, 102) der gegenüberliegenden Seiten der Schiene (100) laufen können. Die Rollen (231, 241) sind mittels vorgespannter Schrägkugellager (236, 246) an der Rolleneinheit (200) gelagert und mit einer vorgegebenen Kraft gegenüber der Schiene (100) vorspannbar. Durch die Vorspannung im Schrägkugellager (236, 246) als auch der Rollen (231, 241) gegenüber der Schiene (100) ist die Lagerung auch bei erhöhter Belastung spielfrei, so dass ein reibungsloser Betrieb und eine präzise Positionierung gewährleistet sind. Die Vorspannungen wirken derart zusammen, dass in der gesamten Lagerung der Rolleneinheit (200) bezüglich der Schiene (100) eine hohe Steifigkeit erreicht wird, so dass auch erhöhte Kräfte aufgenommen werden können. Die Linearführung eignet sich somit auch für Werkzeuge für mittelschwere Bearbeitungsvorgänge, wie z. B. Laserschneiden, Wasserstrahlschneiden oder die Bearbeitung von Holz.

## Beschreibung

### Technisches Gebiet

Die Erfindung betrifft eine Linearführung mit einer Schiene mit Profilierungen auf zwei gegenüberliegenden Seiten und mit einer Rolleneinheit, wobei die Rolleneinheit und die Schiene relativ zueinander in Schienenlängsrichtung verschiebbar sind und wobei die Rolleneinheit mindestens zwei Rollen aufweist, welche auf den Profilierungen der gegenüberliegenden Seiten der Schiene laufen können. Die Erfindung betrifft weiter eine Rolleneinheit für eine derartige Linearführung.

### Stand der Technik

Linearführungen der oben genannten Art sind bekannt. Die EP 0 916 860 B1 (INA Wälzlager Schaeffler) zeigt beispielsweise eine Linearlageranordnung mit einer Führungsschiene, einem Tragkörper und mindestens einem Paar von Laufrollen, die als Lageraussenringe von Wälzlagern ausgebildet sind. Die Führungsschiene besteht beispielsweise aus einer Aluminiumlegierung und weist Nuten zur Aufnahme von Laufschienen aus Stahl auf. An jedem Lagerinnenring ist an einer Stirnseite angrenzend ein den Lagerinnenring zentrierender Zentrierring befestigt, welcher in eine Passbohrung des Tragkörpers eingesteckt ist.

Die US 3,661,431 (Bishop-Wisecarver Corporation) zeigt Führungsrollen mit einer v-förmigen Führungsrinne, wobei die Innen- und Aussenflanken der Rinne jeweils einen 90°-Winkel zueinander aufweisen. Dadurch ist es möglich, diese Führungsrollen auf beiden Seiten einer v-förmigen Schiene abrollen zu lassen. Die Rollen sind auf Kugellagern gelagert mit einer exzentrischen Buchse, welche eine Anpassung des Spiels zwischen der Rolle und der Schiene ermöglicht. So können verschiedenartige Schienen mit demselben Laufwagen verwendet werden, oder der Rollenabstand an Fertigungstoleranzen der verwendeten Schiene angepasst werden.

Derartige Linearführungen sind zum Bewegen kleiner Lasten geeignet und können nur geringe Kräfte aufnehmen. Grössere Kräfte bzw. Drehmomente, welche eine Komponente parallel zur Schienenlängsachse aufweisen, führen wegen des Spiels im Wälzlager und zwischen den Laufrollen und den Laufschienen dazu, dass die relative Position der Tragkörper und der Führungsschienen verändert wird. Dadurch wird einerseits die Längsbewegung des Tragkörpers bezüglich der Schiene behindert und andererseits ergeben sich Positionsfehler der zu bewegenden Teile (z. B. eines Werkzeugs).

Die DE G 90 16 625.6 (Nadella) betrifft einen Schlitten mit mindestens vier Führungsrollen, welcher entlang einer Längsführung verfahren werden kann. Diese ist aus drahtartigen Rundstäben gebildet und kann auch gekrümmte Segmente umfassen. Die Führungsrollen sind in den Ecken einer viereckigen Wagenplatte angeordnet. Jede Führungsrolle weist zwei zueinander parallele Laufringe auf, die durch Lagerkörper drehbar auf einer Achse gelagert sind. Der untere Laufring wirkt mit einem Innenring zusammen, welcher längsverschiebbar auf der Achse gehalten ist. Zwischen dem Innenring und dem Schraubenkopf ist eine Tellerfeder angeordnet. Diese ermöglicht die Kompensation von Spannungen, beispielsweise im Übergangsbereich zwischen Geradeaus- und Kurvenfahrt, indem durch Komprimieren der Spaltfeder der Spalt zwischen den Laufringen erweitert und somit der effektive Abstand der Rollen vergrössert werden kann.

Auch diese Führung ist für kleine Lasten ausgelegt. Damit auch Kurvenfahrten ermöglicht werden, muss nämlich der effektive Abstand der Führungsrollen in gewissen Grenzen variierbar sein. Dies hat aber zur Folge, dass beim Einwirken grösserer Kräfte Spiel zwischen den Führungsrollen und der Längsführung auftritt und somit die Linearbewegung behindert wird und die genaue Positionierung des Wagens verloren geht.

Die DE 38 29 276 C2 (SKF Linearsysteme) betrifft einen Tragkörper mit mehreren Laufrollen, zwischen welchen eine Führungsschiene mit einem Schlitten bewegbar ist. Die Führungsschiene ist in ihrer Symmetrieachse mittels einer Schraube am hin- und her bewegbaren Schlitten befestigt. Die Laufrollen stehen einander mit parallelen Drehachsen quer zur Führungsschiene gegenüber und rollen mit einer Umfangsrille auf gegenüberliegenden dachförmigen Laufbahnen der Führungsschiene ab. Die Laufrollen sind als Aussenringe von zweireihigen Schrägkugellagern ausgebildet. Deren Innenringe laufen auf Bolzen, wobei zwischen den Bolzen und den Lagerinnenringen radial federelastische Elemente angeordnet sind. Diese bewirken eine gewisse Vorspannung der Laufrolle gegenüber der zugehörigen Laufbahn. Die Konstruktion ermöglicht die Verwendung einfach herstellbarer Bolzen und Federelemente zum Befestigen der Laufrollen.

Durch die Vorspannung der Laufrolle gegenüber der Laufbahn ergibt sich ein verbessertes Verhalten der Linearführung auch bei erhöhten Lasten bzw. Kräften, indem diese Kräfte - bis zu einem bestimmten Maximum - durch die federelastischen Elemente zwischen den Bolzen und den Lagerinnenringen aufgenommen werden können.

Allerdings ist die mögliche Vorspannung konstruktionsbedingt eingeschränkt und kann nicht ohne weiteres auf einen vorgegebenen Wert eingestellt werden. Die maximale Kraftaufnahme und die Präzision der Positionierung sind zudem durch vorhandenes Spiel im Kugellager begrenzt.

### Darstellung der Erfindung

Aufgabe der Erfindung ist es, eine dem eingangs genannten technischen Gebiet zugehörende Linearführung zu schaffen, welche auch zum Bewegen grösserer Lasten geeignet ist und höhere Kräfte aufnehmen kann, ohne dass die Laufeigenschaften oder die Positionierungsgenauigkeit der Führung negativ beeinflusst werden.

Die Lösung der Aufgabe ist durch die Merkmale des Anspruchs 1 definiert. Gemäss der Erfindung sind die Rollen mittels vorgespannter Schrägkugellager an der Rolleneinheit gelagert, und die Rollen sind mit einer vorgegebenen Kraft gegenüber der Schiene vorspannbar.

Durch die definierte Vorspannung sowohl im Schrägkugellager als auch der Rollen gegenüber der Schiene ist die Lagerung auch bei erhöhter Belastung spielfrei, so dass ein reibungsloser Betrieb und eine präzise Positionierung gewährleistet sind. Die Vorspannungen wirken derart zusammen, dass in der gesamten Lagerung der Rolleneinheit bezüglich der Schiene eine hohe Steifigkeit erreicht wird, so dass auch grössere Kräfte aufgenommen werden können.

Die Linearführung eignet sich somit auch zum Bewegen von Werkzeugen für mittelschwere Bearbeitungsvorgänge, wie z. B. Laserschneiden, Wasserstrahlschneiden oder die Bearbeitung von Holz. Die erfindungsgemässe Linearführung kann somit anstelle von konstruktiv aufwändigeren und deshalb teureren Kugel- und Rollenumlaufführungen eingesetzt werden. Gegenüber diesen ermöglicht sie zudem eine höhere Dynamik, weil nicht wie bei Umlaufführungen hohe Kräfte bei der Umlenkung auftreten. Schliesslich ist die erfindungsgemässe Linearführung aufgrund ihres einfacheren Aufbaus und der geringeren Zahl bewegter Teile langlebiger und weniger empfindlich auf Verschmutzungen.

Bei der erfindungsgemässen Linearführung ist bevorzugt die Rolleneinheit als Laufwagen ausgebildet, welcher gegenüber der ortsfest angeordneten Schiene bewegbar ist. Es ist aber auch eine Verwendung möglich, bei welcher die Schiene mitsamt daran angeordneten Elementen bezüglich einer fest angeordneten Rolleneinheit verschoben wird.

Mit Vorteil sind die Vorspannung der Schrägkugellager und die Vorspannung der Rollen gegenüber der Schiene abhängig von einer Nennlast derart aufeinander abgestimmt, dass eine maximale Auslenkung in den Schrägkugellagern und eine maximale Auslenkung der Rollen (bzw. von deren Drehachsen) bezüglich der Schiene bei Nennlast ungefähr gleich gross sind. Dadurch wird eine maximale Steifigkeit der Lagerung bei geringst möglichem Laufwiderstand erreicht, denn die mögliche Kraftaufnahme wird durch das "schwächere Glied" bestimmt; eine übermässig grosse Vorspannung eines der Elemente führt somit nur zu einem entsprechend höheren Laufwiderstand (und einer entsprechend höheren Belastung der beteiligten Bauteile), ohne dass die Steifigkeit wesentlich erhöht wird. Die bei der Einwirkung von zulässigen Kräften verbleibenden (tolerierbaren) Auslenkungen sollen sich somit gleichmässig auf die Kugellager bzw. auf die Lagerung der Rollen bezüglich der Schiene verteilen. Die Abstimmung der Vorspannungen kann in Abhängigkeit vom Betrag und von der Richtung der erwarteten Maximalkräfte erfolgen. Bei unterschiedlichen Richtungen der Maximalkraft, z. B. verschiedenen Anordnungen der Rolleneinheit an der Schiene oder bei unterschiedlichen Lasten, können auch bei gleichem Betrag der Kraft für die Kugellager und für die Rollen andere Vorspannungen gewählt werden.

Bevorzugt sind die Schrägkugellager zweireihig und weisen geteilte Innenringe auf. Dies ermöglicht hohe Vorspannungen und hohe Druckwinkel und somit eine Aufnahme von radialen und axialen Kräften, letztere in beiden Richtungen. Die Vorspannung im Schrägkugellager lässt sich durch Abstimmen der Innenringe und die Wahl des Kugeldurchmessers definiert vorgeben.

Vorzugsweise sind die Laufringe der Rollen mittels der Schrägkugellager auf beidseitig abgestützten Bolzen gelagert. Durch die beidseitige Lagerung des Bolzens ist die Steifigkeit der Anordnung massgeblich erhöht, so dass auch grössere Vorspannungen zwischen den Rollen und der Schiene definiert angelegt werden können. Die Linearführung kann somit grössere Maximalkräfte aufnehmen. Gleichzeitig kann der Bolzen mit einem verhältnismässig kleinen Querschnitt ausgeführt werden, so dass die Rollenlagerung kompakter gefertigt werden kann.

Falls die aufzunehmenden Maximalkräfte beschränkt sind oder nur in bestimmten Richtungen auftreten, kann auf die beidseitige Abstützung verzichtet werden. In diesem Fall wird der Bolzen mit Vorteil etwas stärker ausgeführt.

Mit Vorteil ist mindestens eine der Rollen auf einem einstellbaren Exzenter gelagert. Dies erlaubt eine präzise Einstellung der vorgegebenen Vorspannung der Rolle gegenüber der Schiene, wozu gleichzeitig auch nur verhältnismässig geringe Kräfte aufgewendet werden müssen. Die einmal eingestellte Vorspannung kann festgesetzt werden, indem eine Verdrehsicherung für den Exzenter vorgesehen wird. In der Regel genügt es für eine zuverlässige Einstellung der Vorspannung, wenn sämtliche Rollen auf einer der gegenüberliegenden Seiten der Schiene auf einem einstellbaren Exzenter gelagert sind, während sämtliche Rollen auf der anderen Schienenseite auf einer festen Achse gelagert werden können. Die durch die Einstellung der Exzentrizität der exzentrisch gelagerten Rollen eingebrachte Vorspannung verteilt sich ohnehin auf die Rollen auf beiden Seiten der Schiene, wobei die quantitative Verteilung von der Anordnung der Rollen bezüglich der Schiene und von der Art der zu bewegenden Last abhängig ist.

Alternativ sind andere Mittel zum Einstellen der Vorspannung der Rollen gegenüber der Schiene vorgesehen. Der Lagerbolzen des Schrägkugellagers kann beispielsweise entlang einer linearen Führung auf die Schiene zu und von dieser weg bewegt werden.

Mit Vorteil umfasst der Exzenter folgendes:
a) einen Exzenterbolzen, auf welchem die Rolle über das Schrägkugellager gelagert ist;
b) eine Lagerscheibe, welche auf den Exzenterbolzen aufschiebbar ist;
c) eine Spannmutter, welche ein Innengewinde aufweist, mit welchem die Spannmutter auf ein entsprechendes Aussengewinde des Exzenterbolzens aufschraubbar ist, so dass die Lagerscheibe zwischen der Spannmutter und dem Schrägkugellager festgeklemmt und das Schrägkugellager vorgespannt wird; sowie
d) eine Spannplatte, welche in axialer Richtung derart festgezogen werden kann, dass sie reibschlüssig mit einer Aussenseite der Lagerscheibe zusammenwirkt und diese und den Exzenterbolzen fixiert.

Der Abschnitt des Exzenterbolzens, welcher den Innenring des Schrägkugellagers trägt, ist exzentrisch ausgeführt. Die Einstellung der Vorspannung erfolgt durch Verdrehen des Bolzens, so dass der Abstand der Lagerachse von der Kontaktfläche der Rolle mit der Schiene verändert wird. Durch Festziehen der Spannmutter wird die Lagerscheibe in axialer Richtung gegen den Innenring des Schrägkugellagers gedrückt. Dadurch wird der vom Innenring auf die Kugeln ausgeübte Druck erhöht und somit eine Vorspannung im Schrägkugellager aufgebaut. Quantitativ ist die Vorspannung letztlich von der Grösse der im Kugellager verwendeten Kugeln und von der Geometrie des Innen- und des Aussenrings des Schrägkugellagers bestimmt. Nach Festziehen der Spannmutter bilden diese, die Lagerscheibe, der Lagerbolzen und das eigentliche Schrägkugellager einen Einsatz, welcher in das entsprechende Lager der Rolleneinheit eingesetzt werden kann. Eine an sich bekannte radiale Sicherungsschraube kann für die Spannmutter vorgesehen werden, um ein Verdrehen derselben bezüglich des Lagerbolzens zu verhindern.

Nachdem die Rolleneinheit auf die Schiene aufgesetzt worden ist, kann der Exzenterbolzen in eine Drehposition gebracht werden, in welcher die gewünschte Vorspannung zwischen der Rolle und der Schiene erreicht wird. Dabei drehen sich auch die auf den Bolzen aufgeschraubte Spannmutter und die festgeklemmte Lagerscheibe mit. Anschliessend wird die Spannplatte in axialer Richtung festgezogen, bis sie reibschlüssig mit einer ihr zugewandten Seite der Lagerscheibe zusammenwirkt und somit die Spannmutter und den Exzenterbolzen gegen Verdrehen fixiert. Die eingestellte Vorspannung wird somit beibehalten. Weil die Spannplatte axial, d. h. in einer Richtung parallel zum Lagerbolzen, auf die Lagerscheibe zu bewegt wird und beim Festziehen keine Drehung ausführt, werden - im Gegensatz zu bekannten Doppelmutter-Anordnungen - durch das Festziehen die eingestellte Exzentrizität und damit die Vorspannung nicht beeinflusst. Damit die Spannplatte axial festgezogen werden kann, können beispielsweise mehrere Schrauben vorgesehen sein, deren Schäfte durch Löcher in einem Randbereich der Spannplatte geführt sind und mit jeweils einem Gewinde in der Rolleneinheit zusammenwirken.

Mit Vorteil weist der Exzenterbolzen einen profilierten Kopf (z. B. mit einem Sechskant-Innen- oder -Aussenprofil) auf, welcher derart angeordnet ist, dass die Vorspannung der entsprechenden Rolle gegenüber der Schiene mittels eines passenden Drehmomentschlüssels einstellbar ist. Anschliessend wird die eingestellte Vorspannung wie oben beschrieben mittels Festziehen der Spannplatte fixiert. Die Spannplatte weist bevorzugt einen zentralen Ausschnitt auf, durch welchen der profilierte Kopf des Exzenterbolzens hindurch treten kann.

Es sind Linearführungen bekannt, bei welchen mehrere (insbesondere zwei) Schienen parallel angeordnet sind, wobei mit jeder der Schienen eine längs der jeweiligen Schiene bewegliche Einheit zusammenwirkt und wobei diese Einheiten mechanisch starr verbunden sind und die zu bewegende Last gemeinsam tragen. Derartige Führungen weisen aufgrund der grösseren Führungsbasis eine höhere Stabilität auf und können somit grössere Kräfte aufnehmen. Allerdings ist der Abstand der Schienen entlang der Führungsbahn nicht exakt konstant, weil sich beispielsweise durch die unterschiedliche thermische Expansion verschiedener Materialien oder durch mechanische Einflüsse geringfügige Unterschiede im Schienenabstand ergeben. Damit ein reibungsloser Betrieb auch dann möglich ist, wenn derartige Abweichungen vorhanden sind, muss der unterschiedliche Schienenabstand kompensiert werden. Dies erfolgt im Rahmen der vorliegenden Erfindung mit Vorteil dadurch, dass die Rollen einer der Rolleneinheiten derart gelagert sind, dass sie in Richtung ihrer Drehachse bezüglich der Rolleneinheit beweglich sind. Die weitere, mit der anderen Schiene zusammenwirkende Rolleneinheit weist hingegen axial fest gelagerte Rollen auf, so dass ihre präzise Positionierung nicht durch die Kompensation beeinträchtigt wird.

Um diese axiale Beweglichkeit zu ermöglichen, ist bevorzugt ein Lagerbolzen, auf welchem die Rolle über das Schrägkugellager gelagert ist, in einer zentralen Öffnung einer Federscheibe befestigt, wobei die Federscheibe in ihrem Randbereich an der Rolleneinheit befestigt ist. Die Federscheibe ist elastisch und ermöglicht somit eine axiale Bewegung des Lagerbolzens samt der daran gelagerten Teile, wobei diese Bewegung durch das Lager der Rolleneinheit für den jeweiligen Rolleneinsatz geführt und gegebenenfalls beschränkt werden kann. Um die axiale Bewegung zu ermöglichen und zu definieren, weist die Federscheibe bevorzugt mehrere Schlitze auf. Durch die Wahl der Schlitzlängen und -positionen kann die erforderliche Kraft zum axialen Bewegen des Lagerbolzens vorgegeben werden. Die Schlitze werden mit Vorteil so ausgeführt, dass die Federscheibe torsionssteif ist, dass sich also der Lagerbolzen nicht bezüglich der Rolleneinheit verdrehen kann. Dies ist besonders bei der Lagerung von Exzenterbolzen zu beachten.

Mit Vorteil sind die Rollen an der Rolleneinheit derart angeordnet, dass ihre Drehachsen parallel zueinander und zu den gegenüberliegenden Seiten der Schiene sowie senkrecht zur Schienenlängsrichtung orientiert sind. Dies erlaubt eine kompakte Konstruktion der Rolleneinheit und ermöglicht die beidseitige Abstützung der Lagerbolzen der Schrägkugellager.

Alternativ dazu können die Drehachsen der Rollen voneinander unterschiedliche Orientierungen aufweisen oder schräg zu den gegenüberliegenden Seiten der Schiene stehen und beispielsweise mit entsprechend geneigten Laufbahnen der Schiene zusammenwirken.

Bevorzugt verlaufen die Drehachsen der mindestens zwei Rollen in derselben Ebene, wobei die Ebene senkrecht zur Schienenlängsrichtung orientiert ist. Die Rollen wirken somit an bezüglich des Schienenkörpers gegenüberliegenden Stellen auf die Schiene ein, die Schiene wird aufgrund der Vorspannung der Rollen gleichsam zwischen den Rollen eingeklemmt. Die Vorspannung kann somit präzise eingestellt werden. Aufgrund dieser Anordnung der Rollen können überdies Biegekräfte auf die Schiene bzw. auf die Rolleneinheit, wie sie bei nicht gegenüberliegenden Rollen auftreten, weitgehend vermieden werden. Bei einer bevorzugten Ausführungsform der Erfindung weist jede Rolleneinheit zwei Paare von einander gegenüberliegenden Rollen auf und ist somit selbständig entlang der Schiene bewegbar und kann kompakt aufgebaut werden.

Mit Vorteil ist die Schiene aus gehärtetem und geschliffenem Vollstahl gefertigt. Dieses Material bietet gegenüber anderen oft bei Rollenführungen verwendeten Materialien (wie z. B. Leichtmetall, ggf. mit Stahleinsätzen) eine hohe Steifigkeit und kann sehr präzise, mit geringen Fertigungstoleranzen verarbeitet werden. Auch ihr thermisches Verhalten ist gegenüber Leichtmetallschienen vorteilhaft. Schliesslich sind solche Schienen einstückig mit einer Länge von bis mindestens 6 m kommerziell verfügbar.

Die Profilierungen der gegenüberliegenden Seiten der Schiene sind bevorzugt als Innenprofilierungen ausgebildet. Dadurch können bei einer gegebenen Grösse der Rolleneinheit Rollen eines grösseren Durchmessers eingesetzt werden als bei alternativ verwendbaren Aussenprofilierungen; entsprechend steht in der Rolle mehr Platz für die Rollenlagerung zur Verfügung. Es können somit grössere Lager mit einer höheren Belastbarkeit eingesetzt werden.

Mit Vorteil weisen die Profilierungen je zwei schräge Flanken auf, und die Rollen sind derart ausgebildet, dass jede der Rollen mit beiden Flanken zusammenwirkt. Die Profilierungen sind im Querschnitt also "v"- bzw. "u"-förmig, wobei die Drehachsen der Rollen senkrecht auf der Symmetrieebene des Profilquerschnitts stehen. Um beide Flanken zu kontaktieren, werden vergleichsweise grosse Rollen eingesetzt, welche entsprechend hohe Kräfte aufnehmen können und welche auch bei grossen Geschwindigkeiten und Beschleunigungen nur moderate Umdrehungszahlen bzw. Winkelbeschleunigungen erfahren. Bei einer gegebenen Last können somit die Rollenzahl und entsprechend der Kostenaufwand und das Gewicht der Vorrichtung verringert werden. Falls die Profilierung als Innenprofilierung ausgebildet ist, können überdies bei einem zweireihigen Schrägkugellager die hauptsächlich auftretenden, von den beiden Flanken auf die Rollen übertragenen Kräfte optimal abgeleitet werden, indem der Druckwinkel des Schrägkugellagers an den Neigungswinkel der Flanken und die entsprechend erwarteten Kräfte angepasst wird.

Die mit den Flanken zusammenwirkenden Aussenflächen der Rollen sind vorzugsweise konvex gewölbt. So werden zwei Wälzpunkte der Rollenoberfläche mit den seitlichen Flanken des Innenprofils definiert. Differentialschlupf wird vermieden, so dass Schwankungen des Verschiebewiderstandes durch Belastungsänderungen und Positionierungsfehler auf ein Minimum reduziert werden.

Bevorzugt sind die Druckwinkel im Schrägkugellager derart an eine Steigung der beiden Flanken angepasst, dass sich im Wesentlichen gleiche Teilkräfte in den belasteten Schrägkugellagern ergeben, wenn die Rolleneinheit und die Schiene relativ zueinander übereinander oder nebeneinander angeordnet werden. Somit kann die Rolleneinheit-Schiene-Anordnung in verschiedener Weise montiert werden, ohne dass unterschiedliche Kombinationen zur Verfügung gestellt werden müssen. Betrachtet man beispielsweise eine Rolleneinheit mit zwei Rollenpaaren, so wirken bei einer seitlichen Anbringung der Rolleneinheit an der Schiene vorwiegend radiale Kräfte auf zwei der vier Schrägkugellager ein; hängt hingegen die Rolleneinheit unter der Schiene, so wirken vorwiegend axiale Kräfte ein, wobei diese aber auf alle vier Schrägkugellager verteilt werden. Der Druckwinkel wird nun ungefähr so gewählt, dass die über jeweils eine Kugel der belasteten Lager übertragenen Kräfte in beiden Situationen ungefähr gleich gross sind. Dabei ist zu berücksichtigen, dass radiale Kräfte jeweils auf eine grössere Zahl von Kugeln verteilt werden als axiale Kräfte. Untersuchungen haben gezeigt, dass dieses Ziel erreicht wird, wenn bei üblichen Schrägkugellagern ein Druckwinkel (gemessen zu einer radial verlaufenden Geraden) von 20-40°, bevorzugt 25-35°, gewählt wird.

Aufgrund der Steifigkeit seines Aufbaus und der entsprechenden Positionsgenauigkeit kann die erfindungsgemässe Linearführung mit einem Messsystem zum Erfassen einer Position der Rolleneinheit bezüglich der Schiene versehen werden. Der Messvorgang kann inkremental erfolgen, mit Vorteil ist aber das Messsystem derart ausgebildet, dass die Position der Rolleneinheit absolut bestimmt werden kann. Damit ist die Linearführung auch für hochpräzise Bearbeitungsschritte einsetzbar. Das Messsystem kann beispielsweise einen in die Schiene integrierten Massstab umfassen sowie einen an der Rolleneinheit angeordneten Messkopf, welcher den Massstab abtastet und so seine Absolutposition bezüglich der Schiene bestimmen kann. Derartige Systeme sind von Kugel- und Rollenumlaufführungen an sich bekannt, deren Einsatz war bei herkömmlichen Rollenführungen aber wegen der fehlenden Präzision der Lagerung der Laufwagen an der Schiene nicht möglich bzw. nicht sinnvoll.

Aus den vorgenannten Gründen lässt sich auch ein Bremssystem einsetzen, welches an der Rolleneinheit befestigt ist und einen Bremskeil aufweist, welcher zum Bremsen der Relativbewegung der Rolleneinheit und der Schiene mit einer Seite der Schiene zusammenwirken kann. Derartige Bremssysteme sind bei Kugel- und Rollenumlaufführungen an sich bekannt, konnten jedoch mit herkömmlichen Rollenführungen nicht eingesetzt werden, weil ein erhebliches Spiel zwischen der Rolleneinheit und der Schiene und der entsprechend notwendige grosse Abstand des Bremskeils und der Schiene bei nicht-betätigter Bremse ein schnelles und präzises Bremsen verunmöglichten. Im Gegensatz dazu kann bei der erfindungsgemässen Linearführung von der präzisen Führung der Rolleneinheit auf der Schiene insofern profitiert werden, als der Bremskeil auch bei einem kleinen vorgegebenen Bremshub nicht an der Schiene schleift.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A: Eine Schrägansicht einer erfindungsgemässen Linearführung;
- Fig. 1 B: eine schematische Darstellung eines Querschnitts durch die Linearführung parallel zur Schienenlängsrichtung;
- Fig. 2: eine weitere Schrägansicht der Linearführung;
- Fig. 3A: ein Querschnitt der Rolleneinheit der Linearführung;
- Fig. 3B: eine Detailansicht eines Kugellagers zur Lagerung einer Laufrolle;
- Fig. 4A: eine schematische Darstellung eines Querschnitts quer zur Schienenlängsrichtung durch eine Linearführung mit einer Rolleneinheit mit axial beweglichen Rollen;
- Fig. 4B: ein Querschnitt durch diese Rolleneinheit parallel zur Schienenlängsrichtung;
- Fig. 5: eine Schrägansicht der auf eine Schiene aufgesetzten Rolleneinheit; und
- Fig. 6: eine Draufsicht auf eine Federscheibe zur axial beweglichen Lagerung einer Rolle.

Grundsätzlich sind in den Figuren gleiche Teile mit gleichen Bezugszeichen versehen.

### Wege zur Ausführung der Erfindung

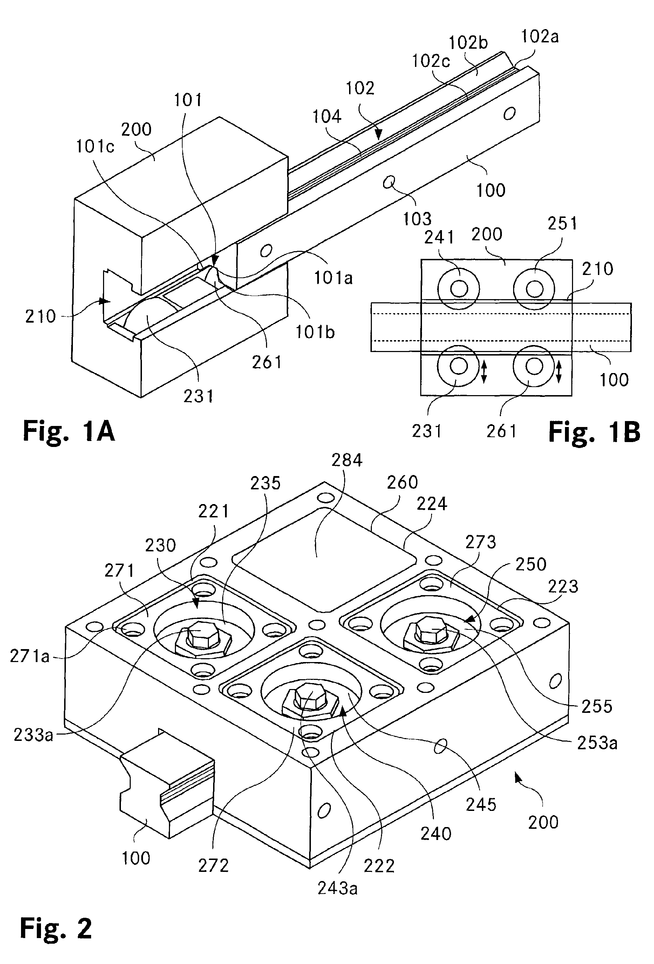

Die Figur 1A zeigt eine Schrägansicht einer erfindungsgemässen Linearführung, in der Figur 1 B ist ein Querschnitt durch die Linearführung parallel zur Schienenlängsrichtung schematisch dargestellt. Die Linearführung umfasst eine gerade Schiene 100 und eine Rolleneinheit 200 (Laufwagen), welche entlang der Schiene 100 verschiebbar ist. In der Figur 1A ist die der Schiene 100 zugewandte Innenseite der Rolleneinheit 200 sichtbar. Diese weist einen Kanal 210 zur Aufnahme eines Teilstücks der Schiene 100 auf. Angrenzend an den Kanal 210 und teilweise in diesen hineinragend sind beidseitig je zwei Rollen 231, 261; 241, 251 (siehe auch Figur 1B) angeordnet. Deren Drehachsen sind parallel zueinander, stehen senkrecht zur Längsausdehnung der Schiene 100 und auch senkrecht zur Hauptfläche der Rolleneinheit 200. Wie in der Figur 1 B sichtbar, stehen sich jeweils zwei Rollen 231, 241 bzw. 251, 261 bezüglich der Schiene 100 direkt gegenüber, so dass die Schiene 100 zwischen den jeweiligen Rollen 231, 241 bzw. 251, 261 gleichsam eingeklemmt wird.

Zwei der Rollen 231, 261, welche auf derselben Seite der Schiene 100 angeordnet sind, sind exzentrisch gelagert, so dass sich eine Vorspannung zwischen den Rollen 231, 241, 251, 261 und der Schiene 100 einstellen lässt, wenn die Rolleneinheit 200 auf die Schiene 100 aufgesetzt ist.

Die Schiene 100 ist aus gehärtetem Vollstahl gefertigt und weist auf zwei gegenüberliegenden Seiten entlang der Schienenlängsrichtung verlaufende, präzisionsgeschliffene Innenprofile 101, 102 auf. Diese sind im Querschnitt u-förmig, wobei von einer horizontalen Basis 101 a, 102a zwei Flanken 101b, 101c, 102b, 102c symmetrisch zueinander schräg nach aussen verlaufen, so dass sich der Kanalquerschnitt ausgehend von der Basis 101a, 102a erweitert. Jede der Rollen 231, 241, 251, 261 wirkt jeweils mit beiden Flanken 101b, 101c bzw. 102b, 102c des entsprechenden Profils 101 bzw. 102 zusammen. Die Rollen sind entsprechend dimensioniert, aufgrund ihres vergleichsweise grossen Durchmessers treten nur moderate Winkelbeschleunigungen auf, so dass die Linearführung bis zu Geschwindigkeiten von 12-15 m/s und entsprechenden Beschleunigungen einsetzbar ist.

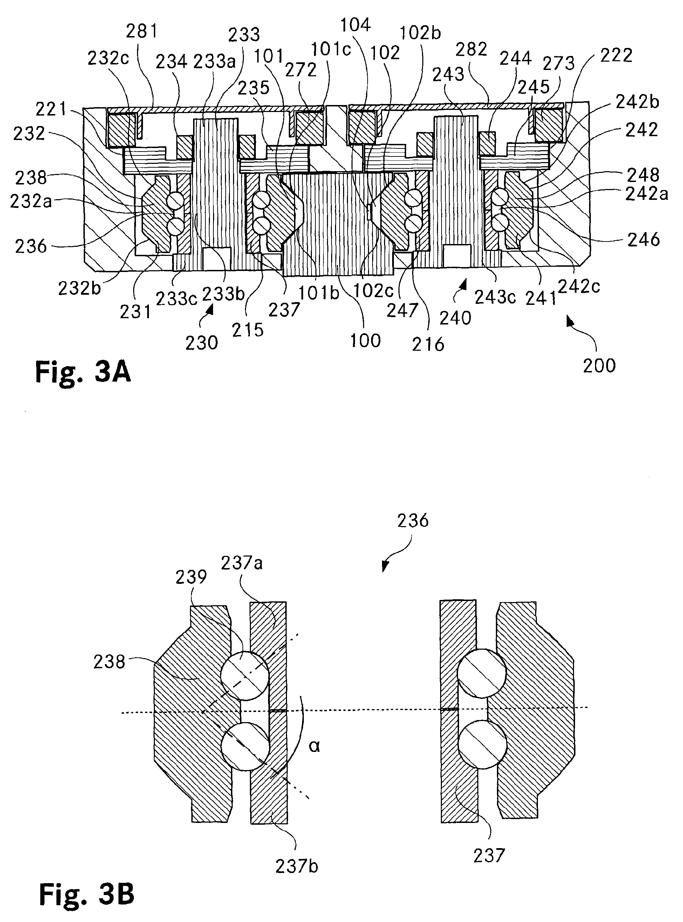

In der Basis 102a eines der Innenprofile 102 ist ein Massstab 104 für ein entsprechendes Messsystem angeordnet (vgl. auch Figur 3A). Dieser weist in an sich bekannter Weise mehrere Markierungen auf, welche Absolutpositionen an der Schiene kennzeichnen. Die Markierungen können unterschiedlich ausgebildet und beispielsweise optisch oder magnetoresistiv erfassbar sein. Für den Messprozess wird an der Rolleneinheit 200 ein Messkopf fest angeordnet, der einen Sensor umfasst, mittels welchem die Positionsinformationen des Massstabs erfasst werden können (nicht dargestellt). Die erfassten Informationen werden elektronisch zu (absoluten) Positionsangaben verarbeitet und beispielsweise an eine Maschinensteuerung übermittelt.

Die Schiene 100 weist entlang ihrer Längsrichtung mehrere Bohrungen 103 auf, welche entlang der Symmetrieachse der Schiene verlaufen, also parallel zu den Rollenachsen der auf die Schiene 100 aufgesetzten Rolleneinheit 200. Mittels der Bohrungen 103 kann die Schiene platzsparend entlang ihrer Symmetrieachse mit einem Träger, einem Maschinengestell oder einer Wand verschraubt werden, wobei sich eine stabile Lagerung der Schiene ergibt. Auf der (nicht sichtbaren) Gegenseite der Schiene weisen die Bohrungen 103 angrenzend an deren Öffnungen Ausnehmungen auf zur Aufnahme der Schraubenköpfe.

Die Rolleneinheit 200 lässt sich, wie in der Figur 1 dargestellt, seitlich an der Schiene 100 anbringen, d. h. die Rollenachsen sind im Betrieb horizontal. Je nach Einsatzzweck kann die Anordnung aber auch beliebig um die Schienen längsachse gedreht werden, die Rolleneinheit 200 kann insbesondere hängend unterhalb der Schiene 100 angeordnet werden, so dass die Rollenachsen im Betrieb senkrecht orientiert sind.

Die Figur 2 zeigt eine weitere Schrägansicht der Linearführung, wobei die Aussenseite der Rolleneinheit 200 sichtbar ist.

Die Rolleneinheit 200 weist vier Lagerbuchsen 221, 222, 223, 224 zur Aufnahme jeweils eines Rolleneinsatzes 230, 240, 250, 260 auf, wobei jeder Rolleneinsatz 230, 240, 250, 260 eine Rolle und die entsprechende Rollenlagerung umfasst. Die Rolleneinsätze 230, 240, 250, 260 werden mittels Spannplatten 271, 272, 273 in den Lagerbuchsen 221...224 gehalten, wobei jede Spannplatte 271, 272, 273 durch in ihren Randbereichen angeordnete, durchgehende Öffnungen 271 mittels Schrauben mit dem Rand der jeweiligen Lagerbuchse 221, 222, 223, 224 verschraubt werden kann. In verschraubtem Zustand wirkt die Unterseite der Spannplatte 271, 272, 273 mit der Oberseite einer Lagerscheibe 235, 245, 255 des Rolleneinsatzes 230, 240, 250, 260 zusammen und fixiert einerseits den Rolleneinsatz 230, 240, 250, 260 in der Lagerbuchse 221...224 und verhindert andererseits durch Reibschluss ein Verdrehen des Rolleneinsatzes 230, 240, 250, 260 bezüglich der Rolleneinheit 200.

Die Spannplatten 271, 272, 273 weisen mittig einen durchgehenden kreisförmigen Ausschnitt auf, durch welchen ein Sechskantkopf 233a, 243a, 253a des Lagerbolzens des jeweiligen Rollenlagers hindurch tritt und somit von aussen zugänglich ist. In der Figur 2 ist dargestellt, wie eine der Lagerbuchsen 224 der Rolleneinheit 200 durch eine Abdeckung 284 verschlossen ist, welche unter anderem das Eindringen von Schmutz von der Aussenseite der Rolleneinheit 200 her verhindert. Für den laufenden Betrieb werden auch die restlichen Lagerbuchsen 221, 222, 223 mit einer solchen Abdeckung verschlossen.

Die Figur 3A zeigt einen Querschnitt der Rolleneinheit 200 der Linearführung entlang einer Ebene quer zur Schienenlängsrichtung, welche durch das Zentrum der Lager zweier einander bezüglich der Schiene 100 gegenüberliegender Rollen 231, 241 verläuft. Die Rolleneinsätze 230, 240 umfassen je einen Lagerbolzen 233, 243 auf welchem ein geteilter Innenring 237, 247 eines Schrägkugellagers 236, 246 gelagert ist. Eines dieser Schrägkugellager 236 ist in der Figur 3B im Detail dargestellt. Die Schrägkugellager 236, 246 sind zweireihig, ihr Aussenring 238, 248 bildet auf seiner Aussenseite gleichzeitig die Lauffläche 232, 242 der Rolle 231, 241. Die Innenringe 237, 247 und Aussenringe 238, 248 sind aus durchgehärtetem Kugellagerstahl gefertigt. Der Druckwinkel α zwischen der Symmetrieebene der Schrägkugellager 236, 246 und der durch die einzelnen Rollen zwischen dem Innenring 237, 247 und dem Aussenring 238, 248 übertragenen Kräfte beträgt ungefähr 25°, so dass auf die Lager wirkende Kräfte sowohl in seitlicher als auch in hängender Anordnung der Rolleneinheit 200 an der Schiene 100 ähnlich gut aufgenommen werden können.

Die Laufflächen 232, 242 weisen im Querschnitt einen parallel zur jeweiligen Seitenfläche der Schiene 100 verlaufenden mittigen Abschnitt 232a, 242a auf sowie seitlich daran anschliessend schräg verlaufende Flankenabschnitte 232b, 232c, 242b, 242c, so dass die Lauffläche 232, 242 in diesem Bereich eine konische Form aufweist. Die Flankenabschnitte 232b, 232c, 242b, 242c kontaktieren die entsprechenden Flanken 101 b, 110c, 102b, 102c der Schiene 100 und sind leicht konvex gewölbt (bombiert), so dass sich definierte Wälzpunkte der Laufflächen 232, 242 mit den seitlichen Flanken 101 b, 101c, 102b, 102c der Innenprofile 101, 102 der Schiene 100 ergeben und Differentialschlupf zwischen den Rollen 231, 241 und der Schiene 100 vermieden wird.

Die Innenringe 237, 247 der Schrägkugellager 236, 246 sind zwischen einem flanschartigen Lagerabschnitt 233c, 243c des Lagerbolzens 233, 243 und einer (gewindefreien) Lagerscheibe 235, 245 festgeklemmt. Die Lagerscheibe 235, 245 ist zwischen dem Innenring 237, 247 und einer Spannmutter 234, 244 auf dem Lagerbolzen 233, 243 axial unverschiebbar gehalten. Die Spannmutter 234, 244 wirkt über ein Innengewinde mit einem Aussengewinde des Lagerbolzens 233, 243 zusammen und ist so weit auf das Gewinde aufgeschraubt worden, dass sich die zwei Teile 237a, 237b des jeweiligen Innenrings 237 berühren (siehe Figur 3B). In den Schrägkugellagern 236, 246 herrscht somit eine Vorspannung, welche quantitativ von der Geometrie des Innenrings 237, 247 und des Aussenrings 238, 248 sowie der Grösse der Kugeln 239 abhängt.

Der Lagerbolzen 233, 243 der Rolleneinsätze 230, 240 ist beidseitig des Innenrings 237, 247 des Schrägkugellagers 236, 246 an der Rolleneinheit 200 gehalten, nämlich einerseits über die Aussenfläche der Lagerscheibe 235, 245 in der entsprechend geformten Lagerbuchse 221, 222 der Rolleneinheit 200 sowie andererseits mit seinem flanschartigen Lagerabschnitt 233c, 243c in einem an der Rolleneinheit 200 ausgebildeten Gegenlager 215,216.

Einer der Lagerbolzen 233 ist exzentrisch ausgebildet, d. h. der den Innenring 237 des Schrägkugellagers 236 tragende, im Querschnitt kreisförmige Abschnitt 233b ist bezüglich der Drehachse des Lagerbolzens 233 exzentrisch. Durch Drehen des Lagerbolzens 233 lässt sich somit ein Abstand der Rolle 231 von der Schiene 100 bzw. eine Vorspannung zwischen den Rollen 231, 241 und der Schiene 100 einstellen. Der Lagerbolzen 243 der gegenüberliegenden Rolle 241 ist im dargestellten Ausführungsbeispiel zentrisch.

Der Zusammenbau und die Justierung der Linearführung finden wie folgt statt. Zunächst werden die Rolleneinsätze 230, 240, 250, 260 zusammengesetzt, d. h. die Rollen 231, 241 mit den noch ungespannten Kugellagern 236, 246 werden auf die Lagerbolzen 233, 243 geschoben, bis die Innenringe 237, 247 der Schrägkugellager 236, 246 den flanschartigen Lagerabschnitt 233c, 243c kontaktieren. Anschliessend wird die Lagerscheibe 235, 245 auf den Lagerbolzen 233, 243 aufgeschoben und die Spannmutter 234, 244 am Lagerbolzen 233, 243 festgezogen bis sich die zwei Teile 237a, 237b; 247a, 247b der Innenringe 237, 247 berühren und somit das Schrägkugellager 236, 246 auf den vorgegebenen Wert vorgespannt ist. Gleichzeitig wird durch Reibschluss auch ein Verdrehen der Lagerscheiben 235, 245 bezüglich des Lagerbolzens 233, 243 oder der Spannmutter 234, 244 verhindert. Die Position der Spannmutter 234, 244 wird nun mit einer (an sich bekannten) Axialsicherung, z. B. durch eine radial durch die Spannmutter 234, 244 bis in den Lagerbolzen 233, 243 verlaufende Schraube, fixiert (nicht dargestellt).

Anschliessend können die Rolleneinsätze 230, 240, 250, 260 in die Lagerbuchsen 221, 222 der Rolleneinheit 200 eingesetzt und die Rolleneinheit 200 seitlich auf die Schiene 100 aufgeschoben werden, so dass die Laufflächen 232, 242 der Rollen 231, 241 mit den Innenprofilen 101, 102 der Schiene 100 in Kontakt kommen. Die zentrischen Rolleneinsätze 230, 240, 250, 260 können nun durch Aufschrauben der Spannplatten 272, 273 an der Rolleneinheit 200 fixiert werden.

Mittels eines Drehmomentschlüssels können nun am Sechskantkopf 233a des exzentrischen Lagerbolzens 233 dessen Exzentrizität und somit die vorgegebene Vorspannung präzise eingestellt werden. Die Einstellung wird fixiert, indem auch hier eine Spannplatte 272 derart axial aufgeschraubt wird, bis sie mit ihrer Unterseite eine entsprechende obere Fläche der Lagerscheibe 235 kontaktiert und somit durch Reibschluss eine Verdrehung des Rolleneinsatzes 230, 260 und somit eine Verstellung der Vorspannung verhindert. Weil die Spannplatte 272 die Lagerscheibe 235 axial kontaktiert, ergibt sich durch das Festziehen keine Beeinflussung der vorher eingestellten Vorspannung.

Schliesslich werden Abdeckungen 281, 282 auf die Öffnungen der Lagerbuchsen 221, 222 auf der Aussenseite der Rolleneinheit 200 aufgesetzt. Die Abdeckungen 281, 282 weisen nach innen gerichtete, federnde Flansche auf, die in die mittige Öffnung der Spannplatte 271, 272 einrasten und somit die Abdeckung 281, 282 an den Lagerbuchsen 221, 222 festhalten.

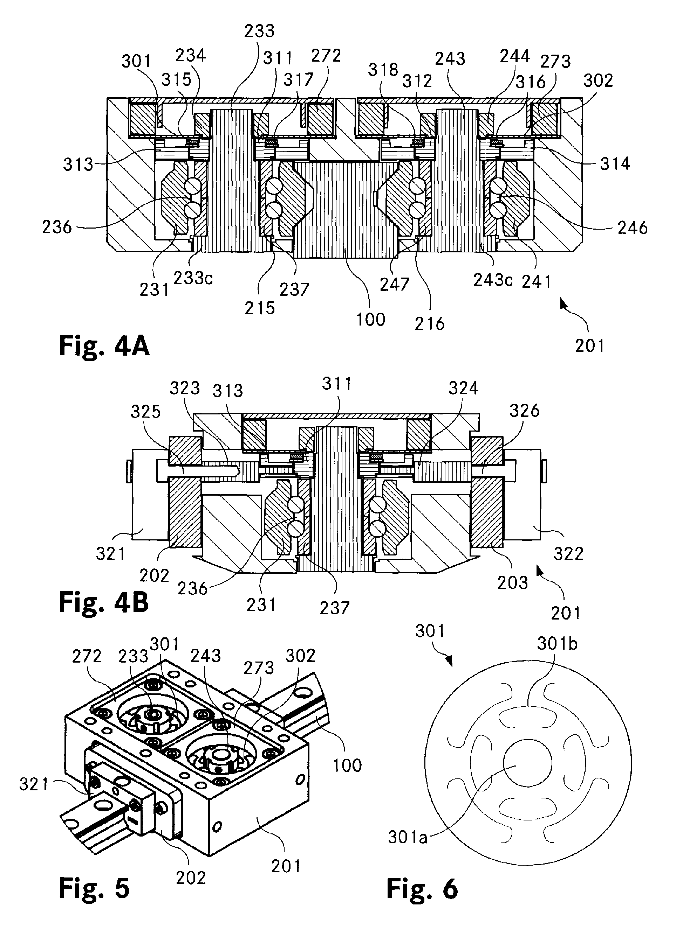

Die Figur 4A ist eine schematische Darstellung eines Querschnitts parallel zur Schienenlängsrichtung durch eine Linearführung mit einer Rolleneinheit 201 mit axial beweglichen Rollen 231, 241; die Figur 4B zeigt einen Querschnitt senkrecht dazu, in derjenigen Ebene, welche die Drehachse der Rolle 231 enthält. Die Figur 5 ist eine Schrägansicht der auf eine Schiene 100 aufgesetzten Rolleneinheit 201. Die Schiene 100 ist identisch aufgebaut wie die Schiene gemäss der ersten Ausführungsform; der Aufbu der Rolleneinheit 201 mit axial beweglichen Rollen entspricht ebenfalls weitgehend derjenigen der ersten Ausführungsform, wobei die dargestellte Rolleneinheit 201 aber nur zwei gegenüberliegende Rollen 231, 241 umfasst. Im Folgenden wird auf die Unterschiede zur im Zusammenhang mit den Figuren 1-3 dargestellten Rolleneinheit 200 eingegangen.

Die Rolleneinheit 201 unterscheidet sich von dieser primär durch eine unterschiedliche Lagerung der Rollen 231, 241 am Gehäuse der Rolleneinheit 201. Anstelle der Lagerscheibe, welche zwischen der Spannmutter 234, 244 und dem Innenring 237, 247 des Schrägkugellagers 236, 246 festgeklemmt ist und somit den Lagerbolzen 233, 243 am Gehäuse axial unverschiebbar festhält, sind mehrere Elemente an der Lagerung beteiligt, welche eine axiale Beweglichkeit des Lagerbolzens 233, 243 und damit der Rollen 231, 241 ermöglichen. Diese Elemente umfassen eine Federscheibe 301, 302, welche entlang ihres Umfangs zwischen der Spannplatte 272, 273 und dem Gehäuse der Rolleneinheit 201 festgeklemmt ist. In einer mittigen Öffnung 301a der Federscheibe 301, 302 (siehe Figur 6) ist diese am Lagerbolzen 233, 243 mittels eines Druckrings 311, 312 zwischen der Spannschraube 234, 244 und dem Innenring 237, 247 des Schrägkugellagers 236, 246 festgeklemmt.

Die in der Figur 6 in einer Draufsicht dargestellte Federscheibe 301 ist aus Federstahl mit einer Dicke von ungefähr 0.2 mm gefertigt. Mehrere Schlitze 301 b sind symmetrisch aus der Federscheibe 301 ausgeschnitten worden, bevorzugt mittels Laserschneiden, welches gratfreie Schnitte und kleine Schlitzbreiten ermöglicht. Die Schlitze 301b weisen im Wesentlichen kreisbogenartige, parallel zum Umfang der Federscheibe 301 verlaufende Abschnitte auf, an welche zurückgebogene, im Wesentlichen radiale Abschnitte anschliessen. Vier Schlitze 301 b sind symmetrisch zum Zentrum entlang eines äusseren Kreises angeordnet, deren radiale Abschnitte weisen bezüglich der kreisbogenartigen Abschnitte nach aussen. Vier weitere Schlitze sind jeweils um 45° zu den äusseren Schlitzen versetzt, wiederum symmetrisch zum Zentrum entlang eines inneren Kreises angeordnet, wobei deren radiale Abschnitte nach innen weisen. Die Anordnung der Schlitze 301 b ermöglicht eine axiale, d. h. senkrecht zur Hauptfläche der Federscheibe 301 gerichtete, Bewegung der mittigen Öffnung 301a bezüglich des Umfangs der Federscheibe 301, sie weist aber bezüglich einer Torsionsbewegung der Öffnung 301 a relativ zum Umfang eine hohe Steifigkeit auf.

Durch eine entsprechende elastische Verformung der Federscheibe 301, 302 können somit der Lagerbolzen 233, 243 und die an ihm befestigte Rolle 231, 241 samt Spannmutter 234, 244 und Druckring 311, 312 in axialer Richtung, d. h. parallel zur Rollenachse, bewegt werden. Die Bewegung dieser Elemente wird geführt durch die Innenfläche eines Führungsrings 313, 314, welche ein Gleitlager für die Aussenfläche des Zwischenstücks 295, 296 bildet, sowie durch die Gegenlager 215, 216 am Gehäuse der Rolleneinheit 201, in welchen der flanschartige Abschnitt 233c, 243c des Lagerbolzens 233, 243 axial verschiebbar geführt ist. Der Führungsring 313, 314 ist am Druckring 311, 312 drehbar aber axial unverschiebbar gehalten. Zu diesem Zweck weist der Druckring 311, 312 auf seiner Unterseite eine ringförmige Ausnehmung auf, in welcher ein entsprechender, ringförmiger Vorsprung des Führungsrings 313, 314 aufgenommen ist. Der oberste Abschnitt des Druckrings 311, 312 weist zudem ein Aussengewinde auf, auf welches eine Mutter 315, 316 zum Fixieren einer Unterlegscheibe 317, 318 aufgeschraubt ist. Zwischen der Unterlegscheibe 317, 318 und dem Vorsprung ist der Führungsring 313, 314 axial fixiert, der Druckring 311, 312 kann aber unbeeinflusst vom Führungsring 313, 314 um seine Achse gedreht werden. Der Aussendurchmesser des Führungsrings 313, 314 entspricht dem Innendurchmesser der Aufnahme für den Rolleneinsatz, so dass er und damit der Druckring 311, 312 radial unverschiebbar im Gehäuse gehalten sind. Die Bewegung der Rolle 231, 241 ist in axialer Richtung durch einen am Gehäuse ausgebildeten Anschlag für den untersten, flanschartigen Lagerabschnitt 233c, 243c des Lagerbolzens 233, 243 begrenzt. Der maximale axiale Weg der Rolle 231, 241 beträgt ungefähr 1-2 mm.

Die Rolleneinheit 201 mit axial beweglichen Rollen 231, 241 wird beispielsweise in einer Anordnung eingesetzt mit zwei miteinander mechanisch starr verbundenen Rolleneinheiten, welche mit parallelen Schienen zusammenwirken. Eine erste der Rolleneinheiten weist zwei axial feste, die andere zwei axial bewegliche Rollen auf. Unterschiede im Schienenabstand, welche beispielsweise durch die unterschiedliche thermische Expansion verschiedener Materialien bewirkt werden, können somit bis zu einer gewissen Obergrenze kompensiert werden, ohne dass die präzise Positionierung der ersten Rolleneinheit beeinträchtigt wird. Die Rolleneinheit 201 ist aber auch für andere Aufgabenstellungen verwendbar, in welchen eine axiale Kompensation der Rollenposition bezüglich des Gehäuses der Einheit (und daran angeordneter Elemente) gewünscht ist.

Rolleneinheiten weisen oft neben den die Schiene 100 kontaktierenden Rollen 231, 241 weitere Elemente auf, welche passend mit der Schiene 100 zusammenwirken müssen, beispielsweise Komponenten von Mess- oder Bremssystemen oder Schmierplatten zum regelmässigen Schmieren der Rollenführung. Aus der Figur 4B ist ersichtlich, wie mit der Schiene passend zusammenwirkende Schmierplatten 321, 322 an einer Rolleneinheit 201 mit axial beweglichen Rollen 231 befestigt werden können. Parallel zur Schienenlängsrichtung weist der Führungsring 313 beidseitig sektorartige Ausnehmungen auf. In diesen ist je ein Befestigungsteil 323, 324 aufgenommen. Diese sind zusammen mit den Rollen 231 in axialer Richtung beweglich und ermöglichen die Befestigung von Stirnplatten 202, 203 mittels radialen Schrauben 325, 326, deren Aussengewinde mit einem Innengewinde im Befestigungsteil 323, 324 zusammenwirken und deren Schraubenköpfe die Stirnplatten 202, 203 der Rolleneinheit 201 festhalten. Die Schmierplatten 321, 322 (sowie andere Zusatzkomponenten) können dann an der Stirnplatte 202, 203 befestigt werden und haben somit stets dieselbe axiale Position wie die mit der Schiene zusammenwirkenden Rollen 231.

Die Erfindung ist nicht auf das dargestellte Ausführungsbeispiel beschränkt. Abhängig von der konkreten Anwendung kann beispielsweise die Geometrie der Schiene hinsichtlich der Art, Querschnitt und Form der Profilierung oder hinsichtlich der Befestigung an einem Grundkörper verändert sein. Auch die Zahl, die Art und die Anordnung der Rollen an der Rolleneinheit, Detailaspekte der Rollenlager und deren Befestigung an der Rolleneinheit sind variierbar. Die Festsetzung der eingestellten Vorspannung kann auf eine andere Weise erfolgen als vorstehend ausgeführt. Zusätzlich zum Messsystem kann die Rolleneinheit mit einem leistungsfähigen Bremssystem versehen werden, welches ebenfalls mit der Schiene zusammenwirkt, wobei das Mess- und das Bremssystem mit Vorteil mit unterschiedlichen Bereichen der Schiene kooperieren, damit keine gegenseitigen Beeinträchtigungen stattfinden.

Zusammenfassend ist festzustellen, dass durch die Erfindung eine Linearführung geschaffen wird, welche auch zum Bewegen grösserer Lasten geeignet ist und entsprechende Kräfte aufnehmen kann, ohne dass die Laufeigenschaften oder die Positionierungsgenauigkeit der Führung negativ beeinflusst werden.

## Patentansprüche

1. Linearführung mit
a) einer Schiene (100) mit Profilierungen (101, 102) auf zwei gegenüberliegenden Seiten;
b) einer Rolleneinheit (200), wobei die Rolleneinheit (200) und die Schiene (100) relativ zueinander in Schienenlängsrichtung verschiebbar sind;
c) wobei die Rolleneinheit (200) mindestens zwei Rollen (231, 241, 251, 261) aufweist, welche auf den Profilierungen (101, 102) der gegenüberliegenden Seiten der Schiene (100) laufen können;
**dadurch gekennzeichnet, dass**
d) die Rollen (231, 241, 251, 261) mittels vorgespannter Schrägkugellager (236, 246) an der Rolleneinheit (200) gelagert sind; und dass
e) die Rollen (231, 241, 251, 261) mit einer vorgegebenen Kraft gegenüber der Schiene (100) vorspannbar sind.

2. Linearführung nach Anspruch 1, **dadurch gekennzeichnet, dass** die Vorspannung der Schrägkugellager (236, 246) und die Vorspannung der Rollen (231, 241, 251, 261) gegenüber der Schiene (100) abhängig von einer Nennlast derart aufeinander abgestimmt sind, dass eine maximale Auslenkung in den Schrägkugellagern (236, 246) und eine maximale Auslenkung der Rollen (231, 241, 251, 261) bezüglich der Schiene (100) bei Nennlast ungefähr gleich gross sind.

3. Linearführung nach Anspruch 1 oder 2, **dadurch gekennzeichnet, dass** die Schrägkugellager (236, 246) zweireihig sind und geteilte Innenringe (237, 247) aufweisen.

4. Linearführung nach einem der Ansprüche 1 bis 3, **dadurch gekennzeichnet, dass** Laufringe (238, 248) der Rollen (231, 241, 251, 261) mittels der Schrägkugellager (236, 246) auf beidseitig abgestützten Bolzen (233, 243) gelagert sind.

5. Linearführung nach einem der Ansprüche 1 bis 4, **dadurch gekennzeichnet, dass** mindestens eine der Rollen (231, 261) auf einem einstellbaren Exzenter (233, 234, 271) gelagert ist.

6. Linearführung nach Anspruch 5, **dadurch gekennzeichnet, dass** der Exzenter folgendes umfasst:
a) einen Exzenterbolzen (233), auf welchem die Rolle (231) über das Schrägkugellager (236) gelagert ist;
b) eine Lagerscheibe (235), welche auf den Exzenterbolzen (233) aufschiebbar ist;
c) eine Spannmutter (234), welche ein Innengewinde aufweist, mit welchem die Spannmutter (234) auf ein entsprechendes Aussengewinde des Exzenterbolzens (233) aufschraubbar ist, so dass die Lagerscheibe (235) zwischen der Spannmutter (234) und dem Schrägkugellager (236) festgeklemmt und das Schrägkugellager (236) vorgespannt wird; sowie
d) eine Spannplatte (271), welche in axialer Richtung derart festgezogen werden kann, dass sie reibschlüssig mit einer Aussenseite der Lagerscheibe (235) zusammenwirkt und diese und den Exzenterbolzen (233) fixiert.

7. Linearführung nach Anspruch 6, **dadurch gekennzeichnet, dass** der Exzenterbolzen (233) einen profilierten Kopf (233a) aufweist, welcher derart angeordnet ist, dass die Vorspannung der entsprechenden Rolle (231) gegenüber der Schiene (100) mittels eines passenden Drehmomentschlüssels einstellbar und anschliessend mittels Festziehen der Spannplatte (271) fixierbar ist.

8. Linearführung nach einem der Ansprüche 1 bis 7, **dadurch gekennzeichnet, dass** die Rollen (231, 241 ) derart an der Rolleneinheit (201) gelagert sind, dass sie in Richtung ihrer Drehachse bezüglich der Rolleneinheit (201) beweglich sind.

9. Linearführung nach Anspruch 8, **dadurch gekennzeichnet, dass** ein Lagerbolzen (233, 243), auf welchem die Rolle (231, 241) über das Schrägkugellager (236, 246) gelagert ist, in einer zentralen Öffnung einer Federscheibe (301, 302) befestigt ist, wobei die Federscheibe (301, 302) in ihrem Randbereich an der Rolleneinheit (201) befestigt ist und wobei die Federscheibe (301, 302) bevorzugt mehrere Schlitze (291 b) aufweist.

10. Linearführung nach einem der Ansprüche 1 bis 9, **dadurch gekennzeichnet, dass** die Rollen (231, 241, 251, 261) derart angeordnet sind, dass ihre Drehachsen parallel zueinander und zu den gegenüberliegenden Seiten der Schiene (100) sowie senkrecht zur Schienenlängsrichtung orientiert sind.

11. Linearführung nach einem der Ansprüche 1 bis 10, **dadurch gekennzeichnet, dass** die Drehachsen der mindestens zwei Rollen (231, 241, 251, 261) in derselben Ebene verlaufen, wobei die Ebene senkrecht zur Schienenlängsrichtung orientiert ist.

12. Linearführung nach einem der Ansprüche 1 bis 11, **dadurch gekennzeichnet, dass** die Schiene (100) aus gehärtetem und geschliffenem Vollstahl gefertigt ist.

13. Linearführung nach einem der Ansprüche 1 bis 12, **dadurch gekennzeichnet, dass** die Profilierungen (101, 102) der gegenüberliegenden Seiten der Schiene (100) als Innenprofilierungen ausgebildet sind.

14. Linearführung nach einem der Ansprüche 1 bis 13, **dadurch gekennzeichnet, dass** die Profilierungen (101, 102) der gegenüberliegenden Seiten der Schiene (100) je zwei schräge Flanken (101b, 101c, 102b, 102c) aufweisen und wobei die Rollen (231, 241, 251, 261) derart ausgebildet sind, dass jede der Rollen (231, 241, 251, 261) mit beiden Flanken (101b, 101 c, 102b, 102c) zusammenwirkt.

15. Linearführung nach Anspruch 14, **dadurch gekennzeichnet, dass** mit den Flanken (101b, 101c, 102b, 102c) zusammenwirkende Aussenflächen (232b, 232c, 242b, 242c) der Rollen (231, 241) konvex gewölbt sind.

16. Linearführung nach Anspruch 14 oder 15, **dadurch gekennzeichnet, dass** ein Druckwinkel (α) im Schrägkugellager (236) derart an eine Steigung der beiden Flanken (101b, 101c) angepasst ist, dass sich im Wesentlichen gleiche Teilkräfte in den belasteten Schrägkugellagern (236) ergeben, wenn die Rolleneinheit (200) und die Schiene (100) relativ zueinander übereinander oder nebeneinander angeordnet werden.

17. Linearführung nach Anspruch 16, **dadurch gekennzeichnet, dass** der Druckwinkel (α) 20-40°, bevorzugt 25-35°, beträgt.

18. Linearführung nach einem der Ansprüche 1 bis 17, **gekennzeichnet durch** ein Messsystem zum Erfassen einer Position der Rolleneinheit (200) bezüglich der Schiene (100).

19. Linearführung nach einem der Ansprüche 1 bis 18, **gekennzeichnet durch** ein Bremssystem, welches an der Rolleneinheit (200) befestigt ist und einen Bremskeil aufweist, welcher zum Bremsen der Relativbewegung der Rolleneinheit (200) und der Schiene (100) mit einer Seite der Schiene (100) zusammenwirken kann.

20. Rolleneinheit (200) für eine Linearführung nach einem der Ansprüche 1 bis 19 umfassend
a) mindestens zwei Rollen (231, 241, 251, 261), welche auf Profilierungen (101, 102) gegenüberliegender Seiten einer Schiene (100) laufen können;
**dadurch gekennzeichnet, dass**
b) die Rollen (231, 241, 251, 261) mittels vorgespannter Schrägkugellager (236, 246) an der Rolleneinheit (200) gelagert sind; und dass
c) die Rollen (231, 241, 251, 261) mit einer vorgegebenen Kraft gegenüber der Schiene (100) vorspannbar sind.
